# EUROPEAN PATENT SPECIFICATION

(11) **EP 2 949 898 B1**
(45) Date of publication and mention of the grant of the patent: **15.03.2017**
(21) Application number: 15165867.1
(22) Date of filing: 07.11.2011
(51) Int. Cl.: F01N 9/00, F01N 3/025

(54) **EXHAUST GAS PURIFIER AND EXHAUST GAS PURIFICATION METHOD FOR AN INTERNAL COMBUSTION ENGINE**
ABGASREINIGER UND ABGASREINIGUNGSVERFAHREN FÜR EINE BRENNKRAFTMASCHINE
PURIFICATEUR ET PROCÉDÉ DE PURIFICATION DE GAZ D'ÉCHAPPEMENT POUR UN MOTEUR À COMBUSTION INTERNE

(30) Priority: 10.11.2010 JP 2010251862
(43) Date of publication of application: 02.12.2015
(62) Divisional of application: 11188013.4
(73) Proprietor: KABUSHIKI KAISHA TOYOTA JIDOSHOKKI, Kariya-shi, Aichi 448-8671 (JP); Toyota Jidosha Kabushiki Kaisha, Toyota-shi, Aichi 471-8571 (JP)
(72) Inventor: KATO, Hidenaga, Kariya-shi,, Aichi 448-8671 (JP); INOUE, Koji, Kariya-shi,, Aichi 448-8671 (JP); TAKAHASHI, Ryota, Kariya-shi,, Aichi 448-8671 (JP); TANIZAWA, Seigaku, Kariya-shi,, Aichi 448-8671 (JP); KOIE, Masanao, Kariya-shi,, Aichi 448-8671 (JP); OKIMURA, Minoru, Toyota-shi,, Aichi 471-8571 (JP)
(74) Representative: TBK

(56) References cited:
- EP-A1- 2 239 432
- JP-A- 2006 194 183
- US-A1- 2008 209 890
- US-A1- 2009 000 605

## Description

### BACKGROUND OF THE INVENTION

The present invention relates to an exhaust gas purifier for an engine. The exhaust gas purifier has an addition nozzle for adding fuel to exhaust gas in an exhaust passage, which guides the exhaust gas after the exhaust gas is discharged from a cylinder of an internal combustion engine.

Conventionally, an exhaust gas purifier having an after-treatment device for purifying exhaust gas and fuel adding means is known (JP 2008-196443 A and US 2008/0209890 A1). The fuel is added as a reducing agent or to raise the temperature of the exhaust gas.

A certain type of exhaust gas purifier includes a particulate filter, which is arranged in an exhaust passage of an internal combustion engine. The particulate filter supports a NOx (nitrogen oxide) storage reduction catalyst. The NOx storage reduction catalyst stores NOx when the air-fuel ratio in exhaust gas is lean and releases and reduces and purifies the stored NOx if the air-fuel ratio in the exhaust gas is rich and the exhaust gas contains a reducing agent such as HC or CO. Specifically, when the air-fuel ratio in the exhaust gas is lean and the NOx storage reduction catalyst in the exhaust passage stores NOx from the exhaust gas, the NOx storage efficiency of the NOx storage reduction catalyst decreases. To avoid this, conventionally, a reducing agent (fuel) is added at a position upstream from the NOx catalyst before or after the NOx storage efficiency drops. This reduces and purifies the NOx stored by the NOx catalyst.

As the particulate filter collects particulate matter (PM), the PM is deposited on the particulate filter in a layered manner. The deposited PM cannot be ignited and burned at typical exhaust gas temperatures. To prevent this, an oxidization catalyst is deployed at a position upstream from the particulate filter and fuel is added into the exhaust passage through an addition nozzle. This causes a reaction of HC, which is an element of the fuel, in the oxidization catalyst, thus increasing the exhaust gas temperature. In this manner, as the deposited PM on the particulate filter is ignited and burned, the particulate filter is regenerated.

In the addition nozzle used to purify the exhaust gas, a deposit may form in a fuel passage in the nozzle and clog the passage.

To solve this problem, in the technique disclosed in JP 2008-196443 A, it is determined whether an addition valve (the addition nozzle) is clogged. When it is determined that clogging has occurred, intensive intermittent fuel addition is performed to remove the deposit. In the technique disclosed in US 2008/0209890 A1, residual fuel and buildup is removed from an injector (addition nozzle) by applying a current to a heater associated with a nozzle portion of the injector.

### SUMMARY

In JP 2008-196443 A, the intensive intermittent fuel addition consumes excessive fuel in order to remove the deposit so that fuel economy is reduced.

Accordingly, it is an objective of the present invention to provide an alternative technique for removing a deposit from an addition nozzle without excessively consuming fuel.

The present invention relates to an exhaust gas purifier for an internal combustion engine as defined in claim 1.

The exhaust gas purifier facilitates deposit removal from the addition nozzle by increasing the temperature of the addition nozzle. Specifically, when the temperature of the addition nozzle is high, deposit is easily removed through fuel injection through the addition nozzle. To raise the temperature of the addition nozzle, the exhaust temperature is increased consuming fuel. In this case, the amount of the consumed fuel decreases compared to fuel consumption through intensive intermittent fuel addition.

According to a preferable example, it may be configured that, when the temperature adjustment state of the temperature raising means is in the raised temperature adjustment state and the determining means determines that the addition nozzle is not clogged, the control means controls the temperature raising means to switch from the raised temperature adjustment state to a normal temperature adjustment state.

In this configuration, when fuel is consumed to increase the exhaust temperature, fuel consumption is suspended if the temperature raising means is switched from the raised temperature adjustment state to the normal temperature adjustment state. This prevents excessive fuel consumption.

According to a preferable example, the temperature raising means may include fuel injection control means. When the determining means determines that the addition nozzle is clogged, the fuel injection control means performs control to increase an after-injection amount for the fuel injection nozzle.

A raised after-injection amount heightens the exhaust temperature, thus facilitating deposit removal.

According to a preferable example, the exhaust gas purifier further includes addition control means for controlling fuel addition by the addition nozzle. The temperature raising means may include the addition control means. When the determining means determines that the addition nozzle is clogged, the addition control means may suspend the fuel addition by the addition nozzle (32) for a predetermined time.

The fuel added through the addition nozzle decreases the exhaust temperature in the vicinity of the injection range. That is, the exhaust temperature in the vicinity of the injection range is increased by suspending fuel addition (fuel injection) through the addition nozzle. This facilitates deposit removal.

In accordance with another aspect of the present invention, an exhaust gas purification method for an internal combustion engine is provided as defined in claim 8.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1A is a schematic view showing an internal combustion engine according to a first embodiment of the present invention;
Fig. 1B is a graph representing the relationship between the temperature and the addition amount decrease rate of an addition nozzle 32, which is illustrated in Fig. 1A;
Fig. 2 is a flowchart representing a fuel injection control program;
Fig. 3 is a flowchart representing a second embodiment of the invention;
Fig. 4 is a schematic view showing an internal combustion engine according to a third embodiment of the invention;
Fig. 5 is a flowchart representing execution by the computer C illustrated in Fig. 4;
Fig. 6 is a schematic view showing an internal combustion engine according to a fourth embodiment of the invention;
Fig. 7 is a flowchart representing execution by the computer C illustrated in Fig. 6;
Fig. 8 is a flowchart representing a fifth embodiment of the invention; and
Fig. 9 is a flowchart representing a sixth embodiment of the invention.

### DESCRIPTION OF THE PREFERRED EMBODIMENTS

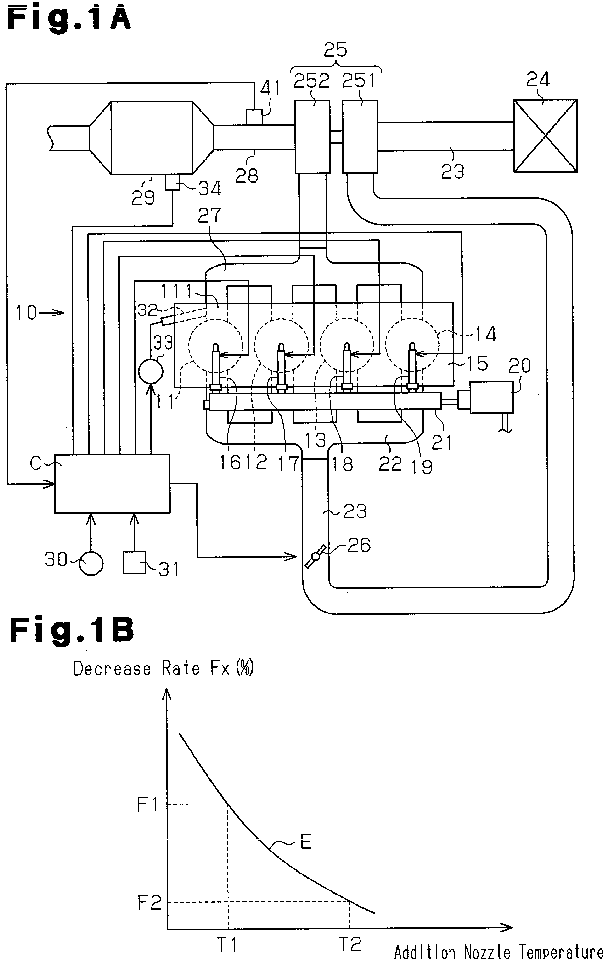

Figs. 1A to 2 illustrate a first embodiment of the present invention, which is embodied in a diesel engine.

As shown in Fig. 1A, a diesel engine 10 (an internal combustion engine) includes a plurality of cylinders 11, 12, 13, 14 for accommodating non-illustrated pistons. The pistons each define a combustion chamber in the corresponding one of the cylinders 11, 12, 13, 14. Fuel injection nozzles 16, 17, 18, and 19 are attached to a cylinder head 15 in correspondence with the cylinders 11, 12, 13, and 14, respectively. Fuel (light diesel oil) is fed to the fuel injection nozzles 16, 17, 18, 19 via a fuel pump 20 and a common rail 21. Each one of the fuel injection nozzles 16, 17, 18, 19 injects the fuel into the combustion chamber in the corresponding one of the cylinders 11, 12, 13, 14. The fuel injection nozzles 16, 17, 18, 19 are subjected to injection control by a computer C.

An intake manifold 22 is connected to the cylinder head 15. An intake pipe 23 is connected to the intake manifold 22 to supply the air as intake gas to the cylinders 11, 12, 13, 14. An air cleaner 24 is connected to the intake pipe 23. The intake manifold 22 and the intake pipe 23 form an intake passage for supplying the intake gas to the cylinders 11, 12, 13, 14. A compressor portion 251 of a supercharger 25 is arranged in the intake pipe 23. The supercharger 25 is a publicly known turbocharger, which is operated by a stream of exhaust gas.

A throttle valve 26 is formed in the intake pipe 23. The throttle valve 26 regulates the flow amount of the air drawn to the intake pipe 23 via the air cleaner 24.

An exhaust manifold 27 is connected to the cylinder head 15. An exhaust pipe 28 is connected to the exhaust manifold 27. An after-treatment device 29 is arranged in the exhaust pipe 28. As the after-treatment device 29, a particulate filter supporting a storage reduction type NOx catalyst or a selective reduction type NOx catalyst and an oxidization catalyst, which is arranged upstream from the particulate filter, are employed. The exhaust gas discharged from the cylinders 11, 12, 13, 14 is released into the atmospheric air through the exhaust manifold 27, a turbine portion 252 of the supercharger 25, the exhaust pipe 28, and the after-treatment device 29. The exhaust manifold 27 and the exhaust pipe 28 form an exhaust passage for guiding the exhaust gas that has been discharged from the cylinders 11, 12,13,14.

A crank angle sensor 30 and an accelerator sensor 31 are signal-connected to the computer C. The crank angle sensor 30 detects the rotation angle (the crank angle) of a non-illustrated crankshaft. Information about the crank angle detected by the crank angle sensor 30 is provided to the computer C. The computer C calculates the engine speed based on the information about the crank angle.

The accelerator sensor 31 detects the depression amount of a non-illustrated accelerator pedal. Detection information about the degree of pedal depression detected by the accelerator sensor 31 is sent to the computer C. The computer C calculates and controls the fuel injection amount for the fuel injection nozzles 16, 17, 18, 19 based on the detection information about the degree of depression and the information about the engine speed with necessary correction based on the coolant temperature or the atmospheric temperature. The computer C treats the calculated fuel injection amount as the engine load.

The cylinder head 15 has an addition nozzle 32. The injection port at the distal end of the addition nozzle 32 is arranged to face an exhaust port 111 of the cylinder 11. An addition pump 33 is connected to the addition nozzle 32. The addition pump 33 supplies fuel to the addition nozzle 32. The addition nozzle 32 injects the supplied fuel into the exhaust port 111 of the cylinder 11. Operation of the addition pump 33 is controlled by the computer C. The computer C configures addition control means for controlling fuel addition by the addition nozzle 32.

The computer C, which controls injection by the fuel injection nozzles 16, 17, 18, 19, controls the operation of the addition pump 33. The computer C estimates the timing for actuating the addition pump 33 to add the fuel to the after-treatment device 29 based on integration of an operating state represented by the engine load and the engine speed.

An in-catalyst exhaust temperature sensor 34 and a catalyst flow-in exhaust temperature sensor 41 are signal-connected to the computer C. The in-catalyst exhaust temperature sensor 34 detects the exhaust temperature at a position downstream from the oxidization catalyst in the after-treatment device 29. The catalyst flow-in exhaust temperature sensor 41 detects the exhaust temperature of the exhaust gas flowing into the after-treatment device 29. Information about the exhaust temperatures obtained by the in-catalyst exhaust temperature sensor 34 and the catalyst flow-in exhaust temperature sensor 41 is provided to the computer C. The computer C obtains the clog amount in the addition nozzle 32 (the accumulation amount of the deposit in the addition nozzle 32) based on the information about the exhaust temperatures.

The curve E in the graph of Fig. 1B represents an example of the relationship between the temperature of the addition nozzle 32 and the decrease rate Fx% of the fuel addition amount in a case in which a constant amount of fuel is added with the addition nozzle 32 clogged by the deposit. In the graph of Fig. 1B, the axis of abscissas represents the temperature of the addition nozzle 32 and the axis of ordinate represents the decrease rate Fx% of the fuel addition amount. F1% is the decrease rate of the fuel addition amount at the time when the temperature of the addition nozzle 32 is the temperature T1. F2% (F2% < F1%) is the decrease rate of the fuel addition amount at the time when the temperature of the addition nozzle 32 is the temperature T2 (T2 > T1). The graph indicates that, when the fuel is added with the addition nozzle 32 clogged by the deposit, the decrease rate Fx% of the fuel addition amount decreases as the temperature of the addition nozzle 32 rises.

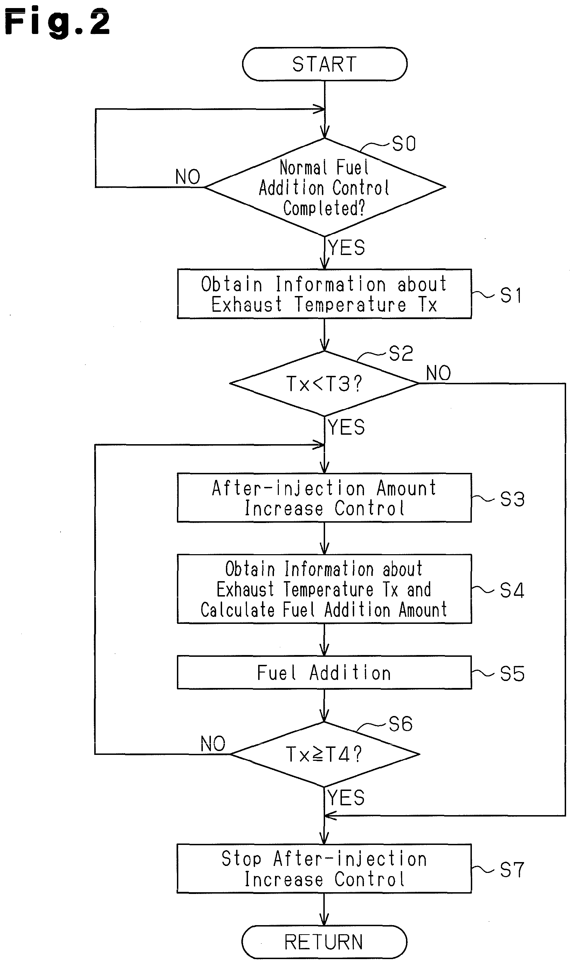

The computer C executes fuel injection control in accordance with the fuel injection control program represented by the flowchart in Fig. 2. The fuel injection control on the diesel engine 10 will hereafter be described with reference to the flowchart. In the first embodiment, main fuel injection is followed by after-injection.

The computer C determines whether normal fuel addition control has been ended (Step S0). In the normal fuel addition control, the fuel is added through the addition nozzle 32 so that the catalyst temperature could reach the catalyst activation temperature To, which is the target. The catalyst activation temperature To is, for example, 300°C. If the exhaust temperature Tx detected by the in-catalyst exhaust temperature sensor 34 is less than the catalyst activation temperature To, for example, the computer C sets the target addition amount for the fuel addition to such a value that the exhaust temperature Tx rises to the catalyst activation temperature To.

If the normal fuel addition control has been completed (YES in Step S0), the computer C obtains the information about the exhaust temperature Tx, which is detected by the in-catalyst exhaust temperature sensor 34 (Step S1). The computer C determines whether the detected exhaust temperature Tx is less than the reference temperature T3, which is a predetermined target (Step S2).

The reference temperature T3 is set to the exhaust temperature detected by the in-catalyst exhaust temperature sensor 34 at the time when the fuel is added with the decrease rate for the amount of the fuel added by the addition nozzle 32 maintained at F3%. Since the decrease rate F3 is set to a value such that the reference temperature T3 becomes lower than the catalyst activation temperature To, the frequency by which it is determined that the addition nozzle 32 is clogged is decreased by the decrease rate F3. The decrease rate F3 is, for example, 40%. In this example, the determination that "the addition nozzle 32 is clogged" is made when the actual fuel addition amount becomes 60% or less (the decrease rate 40% or more) with respect to the target addition amount of the fuel. In this case, the reference temperature T3 is calculated as, for example, T3 = Tx + (To - Tx) x (100 - F3)/100. When the addition nozzle 32 is clogged by deposit, the addition amount decreases and prevents the exhaust temperature from reaching the catalyst activation temperature To for the NOx catalyst in the after-treatment device 29.

If the determination in Step S2 is positive (the detected exhaust temperature Tx is less than the reference temperature T3), the computer C operates to increase the after-injection amount (Step S3). When the detected exhaust temperature Tx is less than the reference temperature T3, the computer C determines that the addition nozzle 32 is clogged. The computer C is a determining means for determining whether the addition nozzle 32 is clogged.

To increase the after-injection amount, the after-injection period is prolonged compared to a normal length. The increased after-injection amount heightens the exhaust temperature in the exhaust pipe 28 and the after-treatment device 29. This raises the temperature of the addition nozzle 32, thus facilitating removal of the deposit from the addition nozzle 32.

The fuel injection nozzles 16 to 19 are temperature raising means that can be adjusted to a raised temperature adjustment state that raises the exhaust temperature in the exhaust passage. The computer C is a fuel injection control means for controlling the fuel injection nozzles 16 to 19 to the raised temperature adjustment means, which is increase of the after-injection amount.

After the start of the control to increase the after-injection amount, the computer C redetects the exhaust temperature Tx by means of the in-catalyst exhaust temperature sensor 34 and calculates the fuel addition amount so that the detected exhaust temperature Tx could rise to the catalyst activation temperature To (Step S4). After Step S4, the computer C performs the fuel addition through the addition nozzle 32 (Step S5). When the fuel injection nozzles 16 to 19 are switched from a normal temperature adjustment state to the raised temperature adjustment state, the fuel addition through the addition nozzle 32 is carried out at least once. Through the fuel addition, the deposit is removed from the addition nozzle 32. After the fuel addition in Step S5, the computer C redetects the exhaust temperature Tx by means of the in-catalyst exhaust temperature sensor 34 and determines whether the detected exhaust temperature Tx is greater than or equal to the reference temperature T4 (T3 < T4 < To), which is set in advance (Step S6).

The reference temperature T4 is set to the exhaust temperature detected by the in-catalyst exhaust temperature sensor 34 at the time when the fuel is added with the decrease rate for the amount of the fuel added by the addition nozzle 32 maintained at F4% (F4 < F3). The decrease rate F4 is such a value that it can be determined that clogging has been eliminated to a certain extent. The decrease rate F4 is, for example, 10%. In this example, it is determined that clogging in the addition nozzle 32 has been eliminated when the actual fuel addition amount becomes 90% or more with respect to the target addition amount of the fuel. In this case, the reference temperature T4 is calculated as, for example, T4 = Tx + (To - Tx) x (100-F4)/100.

Determination whether the addition nozzle 32 is clogged depends on the rising amount of the catalyst temperature after the fuel addition in Step S5 (the temperature detected in Step S6) from the catalyst temperature before the fuel addition in Step S5 (the temperature detected by the in-catalyst exhaust temperature sensor 34 in Step S4).

When the determination in Step S6 is positive (the detected exhaust temperature Tx is greater than or equal to the reference temperature T4), the computer C stops the control to increase the after-injection amount and performs control to return the after-injection amount to the normal injection amount (Step S7). If the detected exhaust temperature Tx is greater than or equal to the reference temperature T4, the computer C determines whether clogging in the addition nozzle 32 has been eliminated. When the after-injection amount is the normal injection amount, the temperature raising means is in the normal temperature adjustment state. If the temperature adjustment state of the temperature raising means is the raised temperature adjustment state, the computer controls the raising means to switch from the raised temperature adjustment state to the normal temperature adjustment state when it is determined that clogging has been eliminated.

If the determination in Step S6 is negative (the detected exhaust temperature Tx is less than the reference temperature T4), the computer C continues the control to increase the after-injection amount (Step S3).

When the determination in Step S2 is negative (the detected exhaust temperature Tx is higher than or equal to the reference value T3), the computer C operates to maintain the after-injection amount as the normal injection amount (Step S7).

The computer C is a control means for regulating the temperature adjustment state of the temperature raising means such that the raising means is switched to the raised temperature adjustment means when the determining means determines that the addition nozzle 32 is clogged. When the temperature adjustment state of the temperature raising means is the raised temperature adjustment state and the determining means determines that clogging is eliminated, the computer C, which is the control means, controls the temperature raising means to switch from the raised temperature adjustment state to the normal temperature adjustment state.

The first embodiment has the advantages described below.
(1) As the temperature of the exhaust gas discharged from the cylinders increases, the temperature of the addition nozzle 32 rises, thus facilitating removal of the deposit from the addition nozzle 32. Accordingly, the deposit is removed by injecting the fuel through the addition nozzle 32 with the exhaust temperature in the vicinity of the addition nozzle 32 maintained high. The amount of the fuel consumed in a case in which the after-injection amount is increased to raise the exhaust temperature in the vicinity of the addition nozzle 32 is small, compared to the amount of the fuel consumed through intensive intermittent fuel addition through the addition nozzle 32.
(2) If it is determined that clogging is eliminated after a determination that the addition nozzle 32 is clogged, the control to increase the after-injection amount is stopped. The after-injection control is thus switched to the normal injection control. In other words, unnecessary fuel consumption is prevented by suspending consumption of the fuel for raising the exhaust temperature in the vicinity of the addition nozzle 32.
(3) In some cases, biofuel may be used as the fuel. However, some types of biofuel easily promote deposit formation in the addition nozzle 32 while other types don't. If fuel having deposit formation properties that vary from one type to another is used with the exhaust purifier described in Japanese Laid-Open Patent Publication No. 2008-196443, which performs intensive intermittent fuel addition, the intensive intermittent fuel addition must be adapted to a fuel type that easily promotes the deposit formation in the addition nozzle 32. The intensive intermittent fuel addition thus consumes excessive fuel for the fuel addition even in a case using a fuel type that doesn't easily promote the deposit formation in the addition nozzle 32. This deteriorates the fuel economy.

However, in the first embodiment, the deposit is removed from the addition nozzle 32 by raising the exhaust temperature in the vicinity of the addition nozzle 32. As a result, unlike the prior art performing control through intensive intermittent fuel addition, fuel economy is improved.

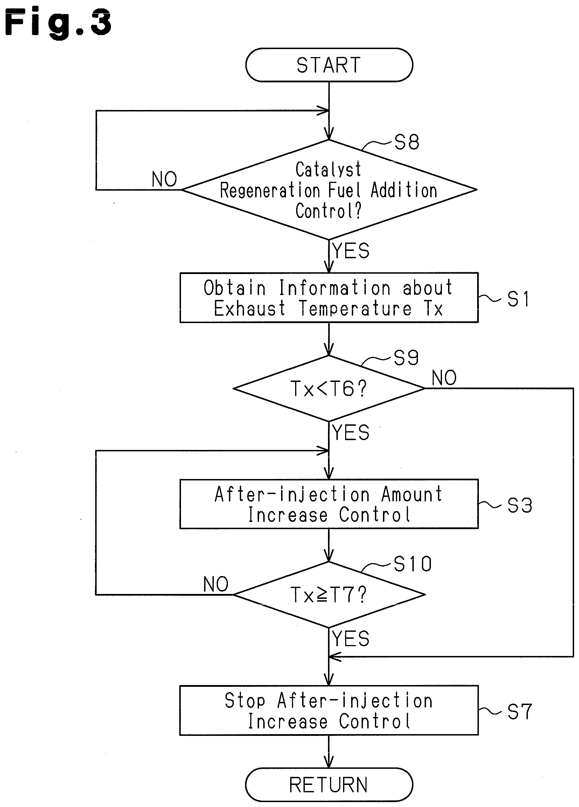

Next, a second embodiment of the present invention will be described with reference to the flowchart in Fig. 3. The second embodiment is different from the first embodiment in that determination whether the addition nozzle 32 is clogged is carried out when the fuel is added through the addition nozzle 32 and that the amount of the fuel added by the addition nozzle 32 is calculated based on the information about the temperature of the exhaust gas that flows into the catalyst and the temperature of the exhaust gas in the catalyst. The configuration of the second embodiment is identical to that of the first embodiment. Same or like reference numerals are given to steps in the flowchart of Fig. 3 that are the same as or like corresponding steps in the flowchart of the first embodiment. Detailed description of these steps is omitted herein.

In the period of catalyst regeneration fuel addition control, the computer C determines whether a certain length of time has elapsed (Step S8). In the catalyst regeneration fuel addition control, the addition nozzle 32 adds fuel to be supplied to oxidization catalyst to maintain the catalyst temperature at the regeneration temperature T5, which is the target, for the certain length of time to heat the catalyst so that the collected PM could burn. The regeneration temperature T5 is, for example, 600°C. When the exhaust temperature Tx detected by the in-catalyst exhaust temperature sensor 34 is less than, for example, the regeneration temperature T5, the computer C sets the target addition amount for the fuel to such a value that the exhaust temperature Tx2 detected by the catalyst flow-in exhaust temperature sensor 41 is raised to the regeneration temperature T5 through the oxidization catalyst in the after-treatment device 29. The computer C adds the fuel through the addition fuel 32 for the certain length of time until regeneration of the catalyst is completed. Although not mentioned in the flowchart of Fig. 3, the catalyst flow-in exhaust temperature sensor 41 constantly detects the temperature Tx2 of the exhaust gas that flows into the after-treatment device 29. The computer C calculates the target fuel addition amount that is necessary for raising the exhaust temperature Tx2, which changes depending on the operating state of the diesel engine 10 or the control to increase the after-injection amount, to the regeneration temperature T5 when necessary, separately from the flowchart in Fig. 3. The computer C then changes the amount of the fuel added through the addition nozzle 32 based on the result of calculation. Specifically, the certain length of time to when regeneration of the catalyst is completed is the time that compensates for a time lag from when the fuel is added through the addition nozzle 32 to when the exhaust temperature is raised by the oxidization catalyst.

When the catalyst regeneration fuel addition control is in continuation or in the period of the catalyst regeneration fuel addition control (YES in Step S8), the computer C obtains information about the exhaust temperature Tx (Step S1). The computer determines whether the detected exhaust temperature Tx is less than the reference temperature T6, which is a predetermined target value (Step S9).

The reference temperature T6 is set to the exhaust temperature detected by the in-catalyst exhaust temperature sensor 34 at the time when fuel is added with the decrease rate of the amount of the fuel added by the addition nozzle 32 maintained at F3%. Since the decrease rate F3 is set to such a value that the reference temperature T6 becomes lower than the reference temperature T5 (T6 < T5), the frequency by which the determination the addition nozzle 32 is clogged is made is decreased to a certain extent. The decrease rate F3 is, for example, 40%. In this example, when the actual fuel addition amount becomes 60% or less (the decrease rate 40% or more) with respect to the target fuel addition amount, it is determined that the addition nozzle 32 is clogged. In this case, the reference temperature T6 is calculated as T6 = Tx + (T5 - Tx) x (100 - F3)/100. As the addition nozzle 32 is clogged by deposit, the addition amount decreases. This prevents the exhaust temperature from reaching the regeneration temperature T5 for the particulate filter in the after-treatment device 29.

If the determination in Step S9 is positive (the detected exhaust temperature Tx is less than the reference temperature T6), the computer C performs the control to increase the after-injection amount (Step S3). When the detected exhaust temperature Tx is less than the reference temperature T6, the computer C determines that the addition nozzle 32 is clogged.

After the control to increase the after-injection amount is started in Step S3, the computer C determines whether the detected exhaust temperature Tx is higher than or equal to the reference temperature T7 (Step S10).

The reference temperature T7 is set to the exhaust temperature detected by the in-catalyst exhaust temperature sensor 34 at the time when fuel is added with the decrease rate of the amount of the fuel added by the addition nozzle 32 maintained at F4% (F4 < F3). The decrease rate F4 is such a value that it can be determined that clogging has been eliminated to a certain extent and is, for example, 10%. In this example, when the actual fuel addition amount becomes 90% or more with respect to the target fuel addition amount, it is determined that clogging in the addition nozzle 32 has been eliminated. In this case, the reference temperature T7 is calculated as, for example, T7 = Tx + (T5 - Tx) x (100 - F4)/100.

As has been described, also in the second embodiment, the exhaust temperature in the vicinity of the addition nozzle 32 is heightened by increasing the after-injection amount. As a result, the second embodiment has the same advantages as the advantages of the first embodiment. Additionally, determination whether the addition nozzle 32 is clogged is performed when fuel addition for catalyst regeneration is carried out through the addition nozzle 32. This facilitates control for unclogging.

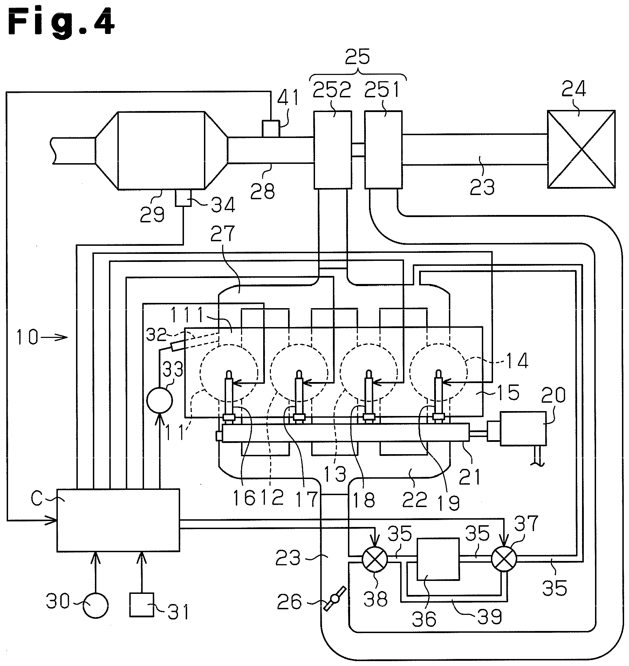

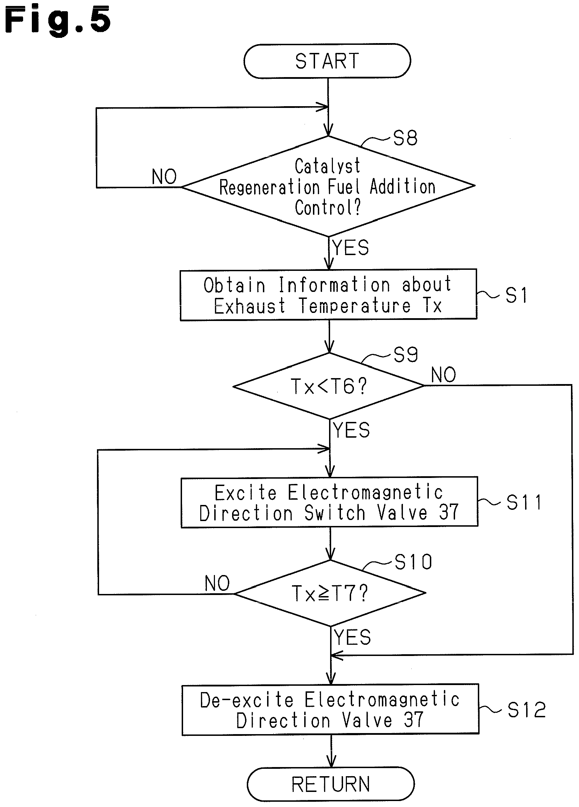

A third embodiment of the present invention will hereafter be described with reference to Figs. 4 and 5. Same or like reference numerals are given to components of the configuration of the third embodiment that are the same as or like corresponding components of the configuration of the first embodiment. Detailed description of these components will be omitted herein.

As illustrated in Fig. 4, an exhaust manifold 27 is connected to the intake pipe 23 through an exhaust gas supply passage 35. A cooler 36 is formed in the exhaust gas supply passage 35. An electromagnetic direction switch valve 37 is arranged in a portion of the exhaust gas supply passage 35 upstream from the cooler 36. A flow control valve 38 is formed in a portion of the exhaust gas supply passage 35 downstream from the cooler 36. The electromagnetic direction switch valve 37 is connected to a portion of the exhaust gas supply passage 35 between the cooler 36 and the flow control valve 38 via a bypass 39.

The electromagnetic direction switch valve 37 and the flow control valve 38 are subjected to excitement/de-excitement control performed by the computer C. The flow control valve 38 adjusts the flow amount of the exhaust gas flowing from the exhaust manifold 27 to the intake pipe 23 through the exhaust gas supply passage 35. When the flow control valve 38 is excited, the portion of the exhaust gas supply passage 35 downstream from the cooler 36 becomes open. If the flow control valve 38 is de-excited, the portion of the exhaust gas supply passage 35 downstream from the cooler 36 becomes closed. When the flow control valve 38 is excited and the electromagnetic direction switch valve 37 is de-excited, the exhaust gas in the exhaust manifold 27 is permitted to flow into the cooler 36 and prohibited from proceeding into the bypass 39. If the flow control valve 38 is excited and the electromagnetic direction switch valve 37 is excited, the exhaust gas in the exhaust manifold 27 is prohibited from moving into the cooler 36 and permitted to flow into the bypass 39.

With reference to the flowchart in Fig. 5, exhaust gas supply control will hereafter be described. Same or like reference numerals are given to steps in the flowchart of Fig. 5 that are the same as or like corresponding steps in the flowchart of the second embodiment. Detailed description of these steps will be omitted herein. The amount of the fuel added by the addition nozzle 32 is calculated in the same manner as the second embodiment.

When the determination in Step S9 is positive (the detected exhaust temperature Tx is less than the reference temperature T6), the computer C excites the electromagnetic direction switch valve 37 (Step S11). If the flow control valve 38 is excited, the exhaust gas in the exhaust manifold 27 is supplied to the cylinders 11 to 14 through the bypass 39 and the intake pipe 23. The exhaust gas bypasses the cooler 36 by flowing through the bypass 39 and is sent to the cylinders 11 to 14 without being cooled by the cooler 36. As a result, the exhaust gas discharged from the cylinders 11 to 14 are heated compared to the exhaust gas that has been cooled by the cooler 36. In other words, the exhaust temperature Tx is high.

After exciting the electromagnetic direction switch valve 37, the computer C performs Step S10. When the determination in Step S10 is positive (the detected exhaust temperature Tx is higher than or equal to the reference temperature T7), the computer C de-excites the electromagnetic direction switch valve 37 (Step S12). If the determination in Step S10 is negative (the detected exhaust temperature Tx is less than the reference temperature T7), the computer C continuously excites the electromagnetic direction switch valve 37.

The computer C, the electromagnetic direction switch valve 37, and the bypass 39 constitute the temperature raising means that may be adjusted to the raised temperature adjustment state that raises the exhaust temperature in the exhaust passage.

As has been described, when the addition nozzle 32 is clogged to a great extent in the third embodiment, the exhaust temperature in the vicinity of the addition nozzle 32 is increased by exciting the electromagnetic direction switch valve 37. Accordingly, the third embodiment has the same advantages as the advantage (1) of the first embodiment. Further, the third embodiment doesn't excessively consume the fuel, which is burned in the cylinders 11 to 14, in order to raise the exhaust temperature Tx. This prevents an abrupt change in the torque caused by a change in the amount of fuel combustion.

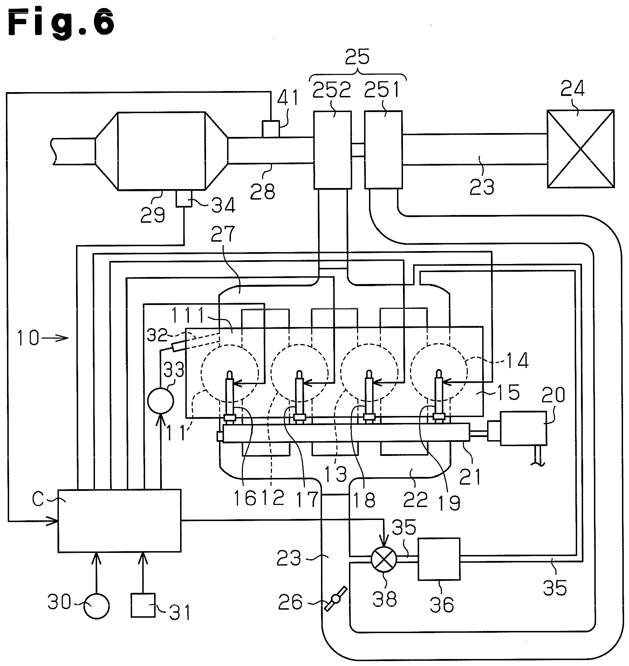

A fourth embodiment of the present invention will now be described with reference to Fig. 6. Same or like reference numerals are given to components of the fourth embodiment that are the same as or like corresponding components of the third embodiment. Detailed description of these components will be omitted herein.

The configuration of the fourth embodiment, which is shown in Fig. 6, is different from the configuration of the third embodiment shown in Fig. 4 in that the fourth embodiment includes neither the electromagnetic direction switch valve 37 nor the bypass 39.

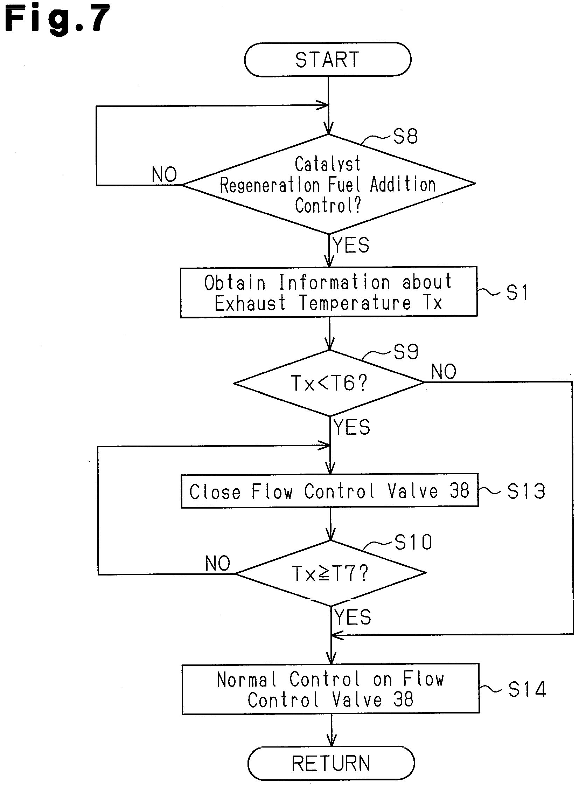

Exhaust gas supply control will be described with reference to the flowchart in Fig. 7. Same or like reference numerals are given to steps in the flowchart of Fig. 7 that are the same as or like corresponding steps in the flowchart of the second embodiment. Detailed description of these steps will be omitted herein.

When the determination in Step S9 is positive (the detected exhaust temperature Tx is less than the reference temperature T6), the computer C controls the flow control valve 38 to close (Step S13). This prevents the exhaust gas in the exhaust manifold 27 from being supplied to the cylinders 11 to 14. By suspending supply of the exhaust gas in the exhaust manifold 27, which is unburned gas, to the intake pipe 23, the combustion temperature in the cylinders 11 to 14 is increased. This raises the exhaust temperature in the vicinity of the addition nozzle 32.

After controlling the flow control valve 38 to close, the computer C executes Step S10. When the determination in Step S10 is positive (the detected exhaust temperature Tx is higher than or equal to the reference temperature T7), the computer C switches the flow control valve 38 to a normal flow amount adjustment state (Step S14). If the determination in Step S10 is negative (the detected exhaust temperature Tx is less than the reference temperature T7), the computer C maintains the flow control valve 38 in the closed state.

The flow control valve 38 and the computer C constitute the temperature raising means that may be adjusted to the raised temperature adjustment state for raising the exhaust temperature in the exhaust passage.

As has been described, when the addition nozzle 32 is clogged to a great extent in the fourth embodiment, the flow control valve 38 is closed. This increases the exhaust temperature in the vicinity of the addition nozzle 32.

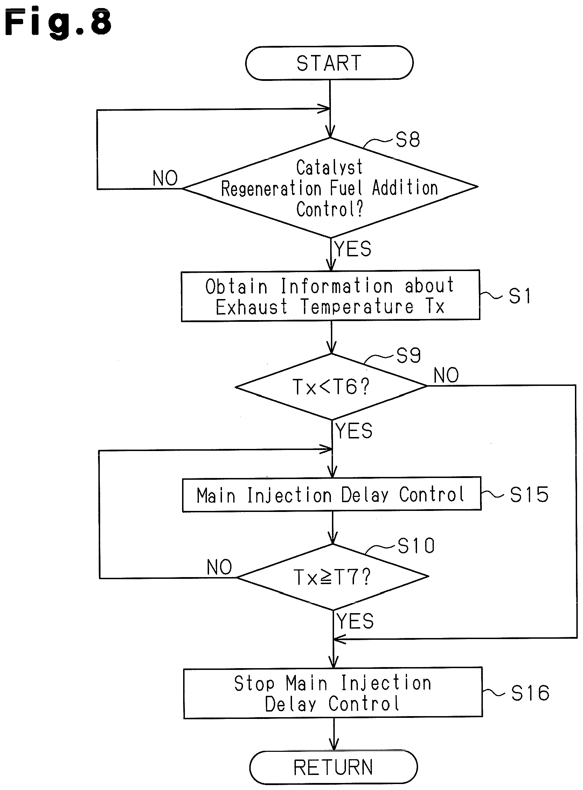

A fifth embodiment of the present invention will hereafter be described with reference to the flowchart in Fig. 8. The configuration of the fifth embodiment is identical to that of the first embodiment. Same or like reference numerals are given to steps in the flowchart of Fig. 8 that are the same as or like corresponding steps in the flowchart of the second embodiment. Detailed description of these steps will be omitted herein.

When the determination in Step S9 is positive (the detected exhaust temperature Tx is less than the reference temperature T6), the computer C operates to delay main injection (Steps S15). This heightens the exhaust temperature Tx.

After performing control to delay the main injection, the computer C carries out Step S10. When a positive determination is made in Step S10 (the detected exhaust temperature Tx is higher than or equal to the reference temperature T7), the computer C stops the control to delay the main injection (Step S16). If negative determination is made in Step S10 (the detected exhaust temperature Tx is less than the reference temperature T7), the computer C continuously performs the control to delay the main injection.

As has been described, when the addition nozzle 32 is clogged to a great extent in the fifth embodiment, the main injection is delayed. This raises the exhaust temperature in the vicinity of the addition nozzle 32.

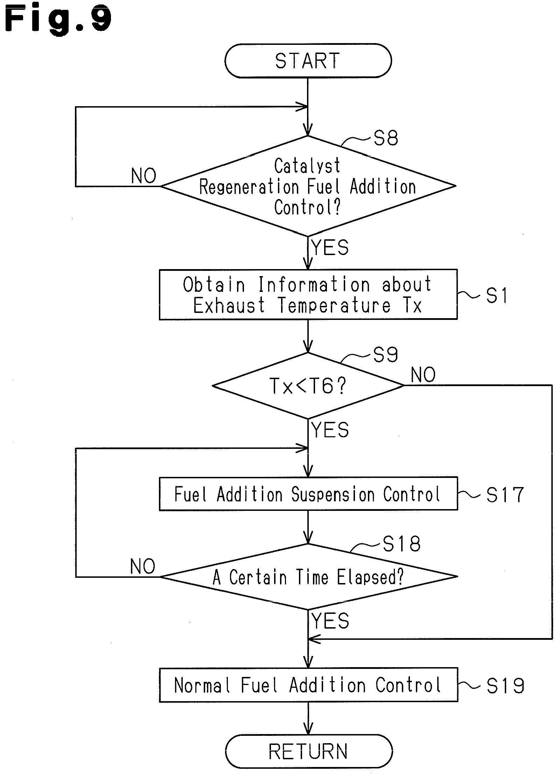

A sixth embodiment of the present invention will now be described with reference to the flowchart in Fig. 9. The configuration of the sixth embodiment is identical to that of the first embodiment. Same or like reference numerals are given to steps in the flowchart of Fig. 9 that are the same as or like corresponding steps in the flowchart of the second embodiment. Detailed description of these steps will be omitted herein.

When the determination in Step S9 is negative (the detected exhaust temperature Tx is higher than or equal to the reference temperature T6), the computer C performs normal fuel addition control through the addition nozzle 32 (Step S19).

If the determination in Step S9 is positive (the detected exhaust temperature Tx is less than the reference temperature T6), the computer C operates to suspend the furl addition through the addition nozzle 32 (Step S17).

The fuel added (injected) through the addition nozzle 32, the temperature of which is lower than the normal exhaust temperature, decreases the exhaust temperature in the vicinity of the injection range. Accordingly, when the fuel addition (injection) through the addition nozzle 32 is stopped, the exhaust temperature in the vicinity of the injection range is raised. This increases the temperature of the addition nozzle 32, thus facilitating removal of deposit from the addition nozzle 32.

After performing control to suspend the fuel addition, the computer C performs Step S18. In Step S18, the computer C determines whether the control to suspend the fuel addition has been continued for a certain length of time. The certain length of time is determined through a test or the like as the time that ensures an increase of the temperature of the addition nozzle 32 by suspending the fuel addition. If the determination in Step S18 is positive (the control to suspend the fuel addition has been continued for the certain length of time), the computer C performs the normal fuel addition control through the addition nozzle 32 (Step S19). When the determination in Step S18 is negative (the control to suspend the fuel addition has not yet been continued the certain length of time), the computer C continuously performs the control to suspend the fuel addition.

The computer C and the addition pump 33 configure the temperature raising means that may be adjusted to the raised temperature adjustment state for increasing the exhaust temperature in the exhaust passage.

As has been described, when the addition nozzle 32 is clogged to a great extent in the sixth embodiment, the fuel addition is suspended. This raises the exhaust temperature in the vicinity of the addition nozzle 32.

The present invention may be embodied in the forms described below.

The reference temperature T3, the reference temperature T4, the reference temperature T6, and the reference temperature T7 may all be set to the catalyst activation temperature To.

Determination of whether the addition nozzle 32 is clogged uses a value that is obtained by the exhaust temperature detecting means after the fuel addition through the addition nozzle 32. However, the invention is not restricted to this. That is, for example, if the injection amount through the addition nozzle 32 is feedback controlled, a fuel correction amount determined through the feedback control may be used to determine whether the addition nozzle 32 is clogged.

The clogging amount of the addition nozzle 32 may be determined using the engine load and the engine speed. When the determined clogging amount reaches a limit clogging amount, the addition pump 33 may be actuated to cause the addition nozzle 32 to add (inject) the fuel. Alternatively, the engine operating time may be measured and it may be determined that the addition nozzle 32 is clogged when the measured time reaches a predetermined time.

Heating means (such as a glow plug) may be arranged in the proximity of the addition nozzle 32 and serve as the temperature raising means.

In the third embodiment shown in Figs. 4 and 5, a driver such as an actuator may be employed to use the electromagnetic direction switch valve 37 as a switch valve having an adjustable open degree. By regulating the open degree of the electromagnetic direction switch valve 37, the amount of the exhaust gas that flows into the cooler 36 and the bypass 39 may be adjusted to raise the exhaust temperature in the vicinity of the addition nozzle 32. Specifically, when it is determined that the addition nozzle 32 is clogged, the computer C switches the switch valve (37) such that the amount of the exhaust gas flowing into the bypass 39 becomes greater than the corresponding amount in a case in which it is determined that the addition nozzle 32 is not clogged.

If it is determined that the addition nozzle 32 is clogged in the fourth embodiment illustrated in Fig. 6, the computer C does not necessarily have to close the flow control valve 38 but may decrease the open degree of the flow control valve 38 compared to the case in which it is determined that the addition nozzle 32 is not clogged.

The addition nozzle 32 may be arranged in the exhaust manifold 27 or the exhaust pipe 28. In other words, fuel may be added from the addition nozzle 32 into the exhaust manifold 27 or the exhaust pipe 28.

The present invention may be used in a diesel engine employing an after-treatment device for particulate matter (PM) or sulfur (S), which is a contaminating substance.

As the after-treatment device 29, a DPNR (Diesel Particulate NOx Reduction) system may be employed. The DPNR system is configured by coating a filter base corresponding to a DPF (Diesel Particulate Filter) with a NOx storage reduction type catalyst. That is, the DPNR system purifies both the PM (Particulate Matter) and NOx.

The fuel may be supplied to the addition nozzle 32 from the fuel pump 20 without using the addition pump 33.

The present invention may be employed in a gasoline engine.

### REFERENCE NUMERALS

10...Diesel Engine as Internal Combustion Engine, 16, 17, 18 and 19...Fuel Injection Nozzles Forming Temperature Raising Means, 27...Exhaust Manifold Forming Exhaust Passage, 28...Exhaust Pipe Configuring Exhaust Passage, 32...Addition Nozzle, 33...Addition Pump Forming Addition Control Means, C...Computer Serving as Control Means and Determining Means.

## Claims

1. An exhaust gas purifier for an internal combustion engine, the exhaust gas purifier comprising an addition nozzle (32) that adds fuel to exhaust gas in an exhaust passage (27, 28) for guiding the exhaust gas that has been discharged from a cylinder (11, 12, 13, 14) of an engine (10), the exhaust gas purifier comprising:
determining means (C) for determining whether the addition nozzle (32) is clogged;
temperature raising means (16-19; C, 37, 39; C, 38; C, 33) that is adjustable to a raised temperature adjustment state for raising the temperature of the addition nozzle (32); and
control means (C) for controlling a temperature adjustment state of the temperature raising means such that the temperature raising means is switched to the raised temperature adjustment state when the determining means (C) determines that the addition nozzle (32) is clogged,
**characterized in that**
the temperature raising means in the raised temperature adjustment state raises the temperature of the addition nozzle (32) by increasing the exhaust temperature in the exhaust passage (27, 28).

2. The exhaust gas purifier according to claim 1, **characterized in that**, when the temperature adjustment state of the temperature raising means is in the raised temperature adjustment state and the determining means (C) determines that the addition nozzle (32) is not clogged, the control means (C) controls the temperature raising means to switch from the raised temperature adjustment state to a normal temperature adjustment state.

3. The exhaust gas purifier according to claims 1 or 2, **characterized in that**
the temperature raising means includes a fuel injection nozzle (16, 17, 18, 19) for injecting the fuel into the cylinder (11, 12, 13, 14) and fuel injection control means (C), and
when the determining means (C) determines that the addition nozzle (32) is clogged, the fuel injection control means (C) performs control to increase an after-injection amount for the fuel injection nozzle.

4. The exhaust gas purifier according to claims 1 or 2, further comprising addition control means (C) for controlling fuel addition by the addition nozzle (32), **characterized in that**
the temperature raising means includes the addition control means, and
when the determining means (C) determines that the addition nozzle (32) is clogged, the addition control means (C) suspends the fuel addition by the addition nozzle (32) for a predetermined time.

5. The exhaust gas purifier according to claims 1 or 2, **characterized in that**
the internal combustion engine includes an intake passage (23) for supplying intake air to the cylinder and an exhaust gas supply passage (35) for supplying the exhaust gas to the intake passage,
a cooler (36) is arranged in the exhaust gas supply passage (35),
the temperature raising means includes a switch valve (37) arranged in a portion of the exhaust gas supply passage upstream from the cooler and a bypass (39) for allowing communication between the switch valve and a portion of the exhaust gas supply passage downstream from the cooler, and
when the determining means (C) determines that the addition nozzle (32) is clogged, the control means (C) switches the switch valve (37) such that the amount of the exhaust gas flowing into the bypass (39) is increased compared to a case in which it is determined that the addition nozzle 32 is not clogged.

6. The exhaust gas purifier according to claims 1 or 2, **characterized in that**
the engine includes an intake passage (23) for supplying intake air to the cylinder and an exhaust gas supply passage (35) for supplying the exhaust gas to the intake passage,
the temperature raising means has a flow control valve (38) arranged in the exhaust gas supply passage (35), and
when the determining means (C) determines that the addition nozzle (32) is clogged, the control means (C) decreases the open degree of the flow control valve (38) compared to a case in which it is determined that the addition nozzle 32 is not clogged.

7. The exhaust gas purifier according to claims 1 or 2, **characterized in that**
the temperature raising means includes a fuel injection nozzle (16, 17, 18, 19) for injecting the fuel into the cylinder (11, 12, 13, 14) and fuel injection control means (C), and
when the determining means (C) determines that the addition nozzle (32) is clogged, the fuel injection control means (C) delays after-injection by the fuel injection nozzle.

8. An exhaust gas purification method for an internal combustion engine, the engine (10) having an addition nozzle (32) for adding fuel into exhaust gas in an exhaust passage (27, 28) for guiding the exhaust that has been discharged from the cylinder (11, 12, 13, 14), the engine (10) further including temperature raising means (16-19; C, 37, 39; C, 38; C, 33) that is adjustable to a raised temperature adjustment state for raising the temperature of the addition nozzle (32), the exhaust gas purification method comprising:
determining whether the addition nozzle (32) is clogged; and
controlling a temperature adjustment state of the temperature raising means such that the temperature raising means is switched to the raised temperature adjustment state when it is determined that the addition nozzle (32) is clogged,
**characterized in that**
the temperature raising means in the raised temperature adjustment state raises the temperature of the addition nozzle (32) by increasing the exhaust temperature in the exhaust passage (27, 28).

## Patentansprüche

1. Abgasreiniger für eine Brennkraftmaschine, wobei der Abgasreiniger eine Beimischungsdüse (32) umfasst, die Abgas in einem Abgaskanal (27, 28) zum Führen des Abgases, das aus einem Zylinder (11, 12, 13, 14) einer Kraftmaschine (10) ausgestoßen worden ist, Kraftstoff beimischt, wobei der Abgasreiniger Folgendes umfasst:
eine Feststellungseinrichtung (C) zum Feststellen, ob die Beimischungsdüse (32) verstopft ist;
eine Temperaturerhöhungseinrichtung (16-19; C, 37, 39; C, 38; C, 33), die zum Erhöhen der Temperatur der Beimischungsdüse (32) auf einen Einstellzustand für eine erhöhte Temperatur einstellbar ist; und
eine Steuerungseinrichtung (C) zum Steuern eines Temperatureinstellzustands der Temperaturerhöhungseinrichtung derart, dass die Temperaturerhöhungseinrichtung zum Einstellzustand für die erhöhte Temperatur umgeschaltet wird, wenn die Feststellungseinrichtung (C) feststellt, dass die Beimischungsdüse (32) verstopft ist,
**dadurch gekennzeichnet, dass**
die Temperaturerhöhungseinrichtung im Einstellzustand für die erhöhte Temperatur die Temperatur der Beimischungsdüse (32) erhöht, indem sie die Abgastemperatur im Abgaskanal (27, 28) erhöht.

2. Abgasreiniger nach Anspruch 1, **dadurch gekennzeichnet, dass**, wenn sich der Temperatureinstellzustand der Temperaturerhöhungseinrichtung im Einstellzustand für die erhöhte Temperatur befindet und die Feststellungseinrichtung (C) feststellt, dass die Beimischungsdüse (32) nicht verstopft ist, die Steuerungseinrichtung (C) die Temperaturerhöhungseinrichtung so steuert, dass sie vom Einstellzustand für die erhöhte Temperatur zu einem Einstellzustand für eine normale Temperatur umschaltet.

3. Abgasreiniger nach den Ansprüchen 1 oder 2, **dadurch gekennzeichnet, dass**
die Temperaturerhöhungseinrichtung eine Kraftstoffeinspritzdüse (16, 17, 18, 19) zum Einspritzen des Kraftstoffs in den Zylinder (11, 12, 13, 14) und eine Kraftstoffeinspritzung-Steuerungseinrichtung (C) beinhaltet und
wenn die Feststellungseinrichtung (C) feststellt, dass die Beimischungsdüse (32) verstopft ist, die Kraftstoffeinspritzung-Steuerungseinrichtung (C) eine Steuerung durchführt, die eine Nacheinspritzmenge für die Kraftstoffeinspritzdüse erhöht.

4. Abgasreiniger nach den Ansprüchen 1 oder 2, der zudem eine Beimischung-Steuerungseinrichtung (C) zum Steuern der Kraftstoffbeimischung durch die Beimischungsdüse (32) umfasst, **dadurch gekennzeichnet, dass**
die Temperaturerhöhungseinrichtung die Beimischung-Steuerungseinrichtung beinhaltet und
wenn die Feststellungseinrichtung (C) feststellt, dass die Beimischungsdüse (32) verstopft ist, die Beimischung-Steuerungseinrichtung (C) die Kraftstoffbeimischung durch die Beimischungsdüse (32) für eine vorbestimmte Zeit aussetzt.

5. Abgasreiniger nach einem der Ansprüche 1 oder 2, **dadurch gekennzeichnet, dass**
die Brennkraftmaschine einen Ansaugkanal (23) zum Zuführen von Ansaugluft zum Zylinder und einen Abgaszufuhrkanal (35) zum Zuführen des Abgases zum Ansaugkanal aufweist,
in dem Abgaszufuhrkanal (35) ein Kühler (36) angeordnet ist,
die Temperaturerhöhungseinrichtung ein Umschaltventil (37), das in einem Abschnitt des Abgaszufuhrkanals stromaufwärts vom Kühler angeordnet ist, und eine Umgehung (39) zum Zulassen einer Verbindung zwischen dem Umschaltventil und einem Abschnitt des Abgaszufuhrkanals stromabwärts vom Kühler beinhaltet und
wenn die Feststellungseinrichtung (C) feststellt, dass die Beimischungsdüse (32) verstopft ist, die Steuerungseinrichtung (C) das Umschaltventil (37) derart umschaltet, dass die Menge des in die Umgehung (39) strömenden Abgases verglichen mit dem Fall, in dem festgestellt wird, dass die Beimischungsdüse (32) nicht verstopft ist, erhöht wird.

6. Abgasreiniger nach einem der Ansprüche 1 oder 2, **dadurch gekennzeichnet, dass**
die Kraftmaschine einen Ansaugkanal (23) zum Zuführen von Ansaugluft zum Zylinder und einen Abgaszufuhrkanal (35) zum Zuführen des Abgases zum Ansaugkanal aufweist,
die Temperaturerhöhungseinrichtung ein Stromregelventil (38) hat, das im Abgaszufuhrkanal (35) angeordnet ist, und
wenn die Feststellungseinrichtung (C) feststellt, dass die Beimischungsdüse (32) verstopft ist, die Steuerungseinrichtung (C) den Öffnungsgrad des Stromregelventils (38) verglichen mit einem Fall, in dem festgestellt wird, dass die Beimischungsdüse (32) nicht verstopft ist, verringert.

7. Abgasreiniger nach einem der Ansprüche 1 oder 2, **dadurch gekennzeichnet, dass**
die Temperaturerhöhungseinrichtung eine Kraftstoffeinspritzdüse (16, 17, 18, 19) zum Einspritzen des Kraftstoffs in den Zylinder (11, 12, 13, 14) und eine Kraftstoffeinspritzung-Steuerungseinrichtung (C) beinhaltet und
wenn die Feststellungseinrichtung (C) feststellt, dass die Beimischungsdüse (32) verstopft ist, die Kraftstoffeinspritzung-Steuerungseinrichtung (C) eine Nacheinspritzung durch die Kraftstoffeinspritzdüse verzögert.

8. Abgasreinigungsverfahren für eine Brennkraftmaschine, wobei die Kraftmaschine (10) eine Beimischungsdüse (32) hat, um Abgas in einem Abgaskanal (27, 28) zum Führen des Abgases, das aus dem Zylinder (11, 12, 13, 14) ausgestoßen worden ist, Kraftstoff beizumischen, und die Kraftmaschine (10) außerdem eine Temperaturerhöhungseinrichtung (16-19; C, 37, 39; C, 38; C, 33) aufweist, die zum Erhöhen der Temperatur der Beimischungsdüse (32) auf einen Einstellzustand für eine erhöhte Temperatur einstellbar ist, wobei das Abgasreinigungsverfahren Folgendes umfasst:
Feststellen, ob die Beimischungsdüse (32) verstopft ist; und
Steuern eines Temperatureinstellzustands der Temperaturerhöhungseinrichtung derart, dass die Temperaturerhöhungseinrichtung zum Einstellzustand für die erhöhte Temperatur umgeschaltet wird, wenn festgestellt wird, dass die Beimischungsdüse (32) verstopft ist,
**dadurch gekennzeichnet, dass**
die Temperaturerhöhungseinrichtung im Einstellzustand für die erhöhte Temperatur die Temperatur der Beimischungsdüse (32) erhöht, indem sie die Abgastemperatur im Abgaskanal (27, 28) erhöht.

## Revendications

1. Purificateur de gaz d'échappement pour un moteur à combustion interne, le purificateur de gaz d'échappement comprenant une buse d'addition (32) qui ajoute du carburant aux gaz d'échappement dans un passage d'échappement (27, 28) pour guider les gaz d'échappement qui ont été évacués d'un cylindre (11, 12, 13, 14) d'un moteur (10), le purificateur de gaz d'échappement comprenant :
des moyens de détermination (C) destinés à déterminer si la buse d'addition (32) est obstruée ;
des moyens d'augmentation de température (16-19 ; C, 37, 39 ; C, 38 ; C, 33) qui peuvent être réglés sur un état de réglage de température augmentée pour augmenter la température de la buse d'addition (32) ; et
des moyens de commande (C) destinés à commander un état de réglage de température des moyens d'augmentation de température de telle sorte que les moyens d'augmentation de température sont amenés à basculer dans l'état de réglage de température augmentée lorsque les moyens de détermination (C) déterminent que la buse d'addition (32) est obstruée,
**caractérisé en ce que**
les moyens d'augmentation de température dans l'état de réglage de température augmentée augmentent la température de la buse d'addition (32) par augmentation de la température d'échappement dans le passage d'échappement (27, 28).

2. Purificateur de gaz d'échappement selon la revendication 1, **caractérisé en ce que**, lorsque l'état de réglage de température des moyens d'augmentation de température se trouve dans l'état de réglage de température augmentée et que les moyens de détermination (C) déterminent que la buse d'addition (32) n'est pas obstruée, les moyens de commande (C) commandent les moyens d'augmentation de température pour les faire basculer de l'état de réglage de température augmentée à un état de réglage de température normale.

3. Purificateur de gaz d'échappement selon la revendication 1 ou 2, **caractérisé en ce que**
les moyens d'augmentation de température comportent une buse d'injection de carburant (16, 17, 18, 19) destinée à injecter le carburant dans le cylindre (11, 12, 13, 14) et des moyens de commande d'injection de carburant (C), et
lorsque les moyens de détermination (C) déterminent que la buse d'addition (32) est obstruée, les moyens de commande d'injection de carburant (C) effectuent une commande pour augmenter une quantité post-injection pour la buse d'injection de carburant.

4. Purificateur de gaz d'échappement selon la revendication 1 ou 2, comprenant en outre des moyens de commande d'addition (C) destinés à commander une addition de carburant par la buse d'addition (32), **caractérisé en ce que**
les moyens d'augmentation de température comprennent les moyens de commande d'addition, et
lorsque les moyens de détermination (C) déterminent que la buse d'addition (32) est obstruée, les moyens de commande d'addition (C) suspendent l'addition de carburant par la buse d'addition (32) pendant un temps prédéterminé.

5. Purificateur de gaz d'échappement selon la revendication 1 ou 2, **caractérisé en ce que**
le moteur à combustion interne comporte un passage d'admission (23) destiné à apporter de l'air d'admission au cylindre et un passage d'alimentation en gaz d'échappement (35) destiné à apporter les gaz d'échappement au passage d'admission,
un refroidisseur (36) est agencé dans le passage d'alimentation en gaz d'échappement (35),
les moyens d'augmentation de température comportent une soupape de commutation (37) agencée dans une partie du passage d'alimentation en gaz d'échappement en amont du refroidisseur et une dérivation (39) destinée à permettre une communication entre la soupape de commutation et une partie du passage d'alimentation en gaz d'échappement en aval du refroidisseur, et
lorsque les moyens de détermination (C) déterminent que la buse d'addition (32) est obstruée, les moyens de commande (C) commutent la soupape de commutation (37) de telle sorte que la quantité de gaz d'échappement s'écoulant à l'intérieur de la dérivation (39) est augmentée en comparaison d'un cas dans lequel il est déterminé que la buse d'addition (32) n'est pas obstruée.

6. Purificateur de gaz d'échappement selon la revendication 1 ou 2, **caractérisé en ce que**
le moteur comprend un passage d'admission (23) destiné à apporter de l'air d'admission au cylindre et un passage d'alimentation en gaz d'échappement (35) destiné à apporter les gaz d'échappement au passage d'admission,
les moyens d'augmentation de température présentent une soupape de commande d'écoulement (38) agencée dans le passage d'alimentation en gaz d'échappement (35), et
lorsque les moyens de détermination (C) déterminent que la buse d'addition (32) est obstruée, les moyens de commande (C) diminuent le degré d'ouverture de la soupape de commande d'écoulement (38) en comparaison d'un cas dans lequel il est déterminé que la buse d'addition (32) n'est pas obstruée.

7. Purificateur de gaz d'échappement selon la revendication 1 ou 2, **caractérisé en ce que**
les moyens d'augmentation de température comportent une buse d'injection de carburant (16, 17, 18, 19) destinée à injecter le carburant dans le cylindre (11, 12, 13, 14) et des moyens de commande d'injection de carburant (C), et
lorsque les moyens de détermination (C) déterminent que la buse d'addition (32) est obstruée, les moyens de commande d'injection de carburant (C) retardent la post-injection par la buse d'injection de carburant.

8. Procédé de purification de gaz d'échappement pour un moteur à combustion interne, le moteur (10) présentant une buse d'addition (32) destinée à ajouter du carburant dans les gaz d'échappement dans un passage d'échappement (27, 28) pour guider les gaz d'échappement qui ont été évacués du cylindre (11, 12, 13, 14), le moteur (10) comprenant en outre des moyens d'augmentation de température (16-19 ; C, 37, 39 ; C, 38 ; C, 33) qui peuvent être réglés sur un état de réglage de température augmentée pour augmenter la température de la buse d'addition (32), le procédé de purification des gaz d'échappement consistant à :
déterminer si la buse d'addition (32) est obstruée ; et
commander un état de réglage de température des moyens d'augmentation de température de telle sorte que les moyens d'augmentation de température sont amenés à basculer sur l'état de réglage de température augmentée lorsqu'il est déterminé que la buse d'addition (32) est obstruée,
**caractérisé en ce que**
les moyens d'augmentation de température dans l'état de réglage de température augmentée augmentent la température de la buse d'addition (32) par augmentation de la température d'échappement dans le passage d'échappement (27, 28).
